# EUROPEAN PATENT SPECIFICATION

(11) **EP 4 100 147 B1**
(45) Date of publication and mention of the grant of the patent: **15.07.2026**
(21) Application number: 21703559.1
(22) Date of filing: 05.02.2021
(51) Int. Cl.: B01D 53/14

(54) **PROCESS AND PLANT FOR GAS MIXTURES CONTAINING ACID GAS TREATMENT**
VERFAHREN UND ANLAGE FÜR GASGEMISCHE MIT SÄUREGASBEHANDLUNG
PROCÉDÉ ET INSTALLATION DE TRAITEMENT DE MÉLANGES DE GAZ CONTENANT DU GAZ ACIDE

(30) Priority: 06.02.2020 IT 202000002353
(43) Date of publication of application: 14.12.2022
(73) Proprietor: ENI S.p.A., 00144 Roma (IT)
(72) Inventor: DE ANGELIS, Alberto Renato, 20097 San Donato Milanese (MI) (IT); GAMBAROTTA, Enrico Francesco, 20097 San Donato Milanese (MI) (IT); FIORI, Gianluca, 20097 San Donato Milanese (MI) (IT)
(74) Representative: Studio Torta S.p.A.
(86) International application number: PCT/IB2021/050955
(87) International publication number: WO 2021/156814

(56) References cited:
- EP-A1- 3 552 688
- WO-A1-2006/103812
- DE-A1- 102007 005 494
- DE-A1- 19 945 326
- GB-A- 2 167 397
- KR-A- 20140 139 821
- US-A1- 2011 203 314
- US-A1- 2011 296 992
- US-A1- 2012 009 114
- US-A1- 2013 056 676
- US-A1- 2017 001 142
- US-A1- 2017 114 295
- HELDEBRANT D J ET AL: "Organic liquid CO2 capture agents with high gravimetric CO2 capacity", ENERGY & ENVIRONMENTAL SCIENCE, RSC PUBL, CAMBRIDGE, vol. 1, 18 July 2008 (2008-07-18), pages 487 - 493, XP009135149, ISSN: 1754-5692, [retrieved on 20080718], DOI: 10.1039/H809533G
- LAM PHAN ET AL: "Switchable Solvents Consisting of Amidine/Alcohol or Guanidine/Alcohol Mixtures", INDUSTRIAL & ENGINEERING CHEMISTRY RESEARCH, vol. 47, no. 3, 1 February 2008 (2008-02-01), pages 539 - 545, XP055504543, ISSN: 0888-5885, DOI: 10.1021/ie070552r
- XIE YUAN ET AL: "Synthesis and characterization of switchable ionic compound based on DBU, CH3OH, and CO2", CHINESE JOURNAL OF CHEMICAL ENGINEERING, CHEMICAL INDUSTRY PRESS, BEIJING, CN, vol. 23, no. 10, 14 August 2015 (2015-08-14), pages 1728 - 1732, XP029307726, ISSN: 1004-9541, DOI: 10.1016/J.CJCHE.2015.08.005
- DAVID J HELDEBRANT ET AL: "Performance of single-component CO-binding organic liquids (COBOLs) for post combustion COcapture", CHEMICAL ENGENEERING JOURNAL, ELSEVIER, AMSTERDAM, NL, vol. 171, no. 3, 7 February 2011 (2011-02-07), pages 794 - 800, XP028098347, ISSN: 1385-8947, [retrieved on 20110212], DOI: 10.1016/J.CEJ.2011.02.012
- HELDEBRANT DAVID J ET AL: "Are Water-lean Solvent Systems Viable for Post-Combustion CO2Capture?", ENERGY PROCEDIA, ELSEVIER, NL, vol. 114, 18 August 2017 (2017-08-18), pages 756 - 763, XP085177726, ISSN: 1876-6102, DOI: 10.1016/J.EGYPRO.2017.03.1218

## Description

### TECHNICAL FIELD

The present invention relates to a process and a plant for gas mixtures containing acid gas treatment, for the removal of one or more acid gases from the gas mixture.

In particular, the invention finds a preferred application in the treatment of gas mixtures containing one or more acid gases such as H2S, CO2, SO2, mercaptans.

### BACKGROUND ART

For example, gas mixtures consisting of natural gas containing acid gas, associated gas containing acid gas, flue gas containing CO2 and/or SOx), coal gas (so-called CBM, "coal bed methane") containing acid gas are advantageously treated according to the invention.

Different types of gas mixtures for industrial use, such as natural gas and flue gas of various kinds (deriving from natural gas, coal and other fossil fuels, etc.), contain acid gas that must normally be removed from gas mixtures before they are sent for subsequent operations and/or uses.

A commonly used industrial method for the removal of acid gas from gas mixtures provides for the absorption of acid gas using aqueous solutions of amines, as described for example in S. Mokhatab and W. A. Poe, Handbook of Natural Gas Transmission and Properties, Second Edition, Elsevier 2012, paragraph 7.7, pp. 255-265.

However, the known techniques reminded herein, like other similar ones, require relatively complex and expensive plants and relatively expensive process operations.

In particular, the known processes based on the use of aqueous solutions of amines are not fully satisfactory, above all because they require, downstream of the treatment for the removal of acid gas, suitable systems for regenerating the aqueous solutions of amines used as absorption solvent, commonly called "reclaimer"; regeneration is typically carried out in distillation towers, with a consequent significant increase in the complexity of the plant and the related installation and operating costs.

The scientific and patent literature describe nonaqueous systems, such as the one described in WO2012/033973: in this case, however, the system is able to treat only a natural gas that contains exclusively CO₂, because, as well is known in the literature and described in the article Y.Mehmet & J. B. Hyne: "The reaction of hydrogen sulfide with sulfoxides", Phosphorus and Sulfur and the Related Elements, Vol.1, 1976 - Issue 1, pp. 47-54, the dimethyl sulfoxide claimed in said patent reacts with H2S giving rise to the precipitation of elemental sulfur, which would occlude the absorber column.

US 2017/001142 A1 and WO 2006/103812 A1 disclose processes for removing acid gases from a gaseous mixture by absorption with an ionic liquid.

### DISCLOSURE OF INVENTION

It is therefore an object of the present invention to provide a process for treatment of gas mixtures containing one or more acid gases which is free from the drawbacks of the known art highlighted herein; in particular, it is an object of the invention to provide a process for treatment of gas mixtures containing acid gas, either CO₂ or H₂S or mercaptans, which allow an effective removal of acid gas in a relatively simple and economical way.

In accordance with these objects, the present invention relates to a process and a plant for treatment of gas mixtures containing acid gas as defined in claim 1.

Additional preferred characters of the invention are indicated in the dependent claims.

The invention is characterized, in a nutshell, in that the removal of acid gas(es) from the gas mixture is performed by absorption with an absorption solvent comprising particular ionic liquids.

The solvent used, after having absorbed the acid gas(es) from the gas mixture, is then regenerated in an extremely simple and effective way in a simple flash process, thus without requiring expensive equipment such as the distillation columns traditionally used for the regeneration of aqueous solutions of amines.

In this way, the invention allows an effective removal of acid gas in a significantly simpler and cheaper way than with known techniques.

### BRIEF DESCRIPTION OF THE DRAWINGS

Further characteristics and advantages of the present invention will become clear from the following description of a non-limiting example of an embodiment thereof, with reference to the figures of the attached drawings, in which:
Figure 1 schematically represents a first embodiment of a plant operating in accordance with the invention;
Figure 2 schematically represents a second embodiment of a plant operating in accordance with the invention;
Figure 3 schematically represents a third embodiment of a plant operating in accordance with the invention;
Figure 4 contains a table (Table I) which shows some operating data of the plant of Figure 2 in implementation of a first embodiment example of the process of the invention;
Figure 5 contains a table (Table II) which shows some operating data of the plant of Figure 3 in implementation of a second embodiment example of the process of the invention;
Figure 6 contains a table (Table III) which shows operating data of the plant of Figure 3 in implementation of a further embodiment of the process of the invention.

### BEST MODE FOR CARRYING OUT THE INVENTION

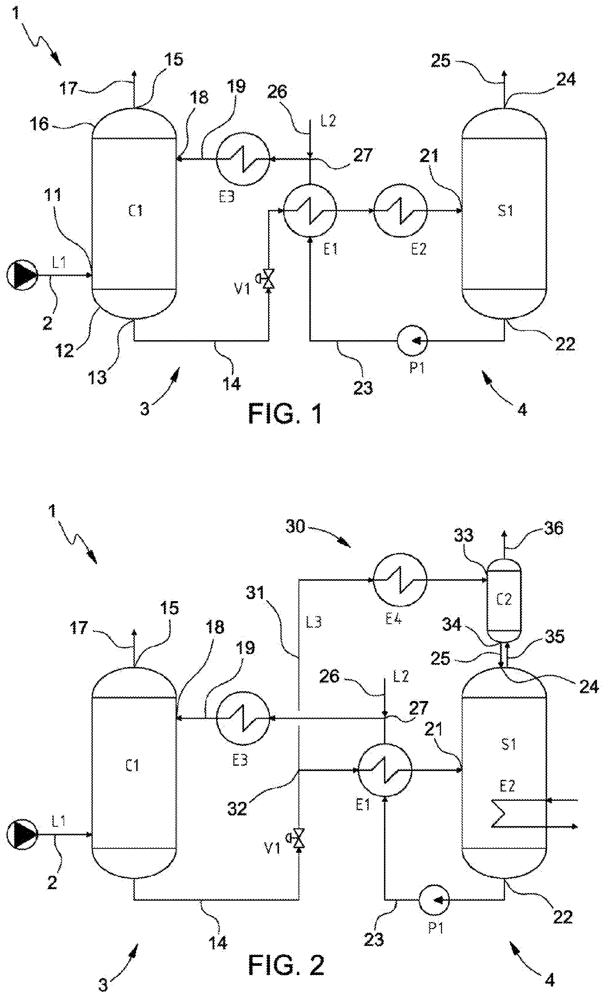

In Figure 1, the reference number 1 as a whole indicates a plant for treatment of gas mixtures containing one or more acid gases, for the removal of said one or more acid gases from the gas mixtures.

The plant 1 comprises a supply line 2, through which a gas mixture L1 to be treated, containing acid gas, is fed to the plant 1; an absorption section 3, in which the gas mixture L1 to be treated is subjected to an absorption step by means of a solvent system, containing at least one liquid absorption solvent and/or the precursors thereof, to remove the acid gas from the gas mixture L1 contained therein; and a regeneration section 4, in which the liquid absorption solvent, which has absorbed the acid gas from the gas mixture in the absorption section 3, is subjected to a gas/liquid separation step to be separated from the absorbed acid gas and to be then recirculated to the absorption section 3.

The gas mixture L1 to be treated is fed to the plant 1, precisely to the absorption section 3, through the supply line 2, optionally equipped with a compressor to bring the gas mixture L1 to a predetermined supply pressure.

The absorption section 3 comprises an absorber C1, configured to carry out the absorption step on the gas mixture to be treated.

For example, the absorber C1 is defined by an absorber column operating in countercurrent by washing with a liquid phase (solvent system containing the liquid absorption solvent or the precursors thereof) of a gaseous phase (gas mixture to be treated, containing acid gas).

Advantageously, the absorber column defining the absorber C1 contains inside contact elements suitably shaped and distributed so as to increase the exchange surface between the gas/vapour phase and the liquid phase. Preferably, the contact elements consist of so-called structured packings (e.g. structured packings Sulzer^{®} or Koch^{®}), but they can also consist of traditional packings (e.g. Raschig rings, Berl saddles, and the like) or plates (e.g. example perforated or bell plates). Furthermore, the absorber column can be provided with a thermal disposal system to remove the reaction heat, which is generated in the formation of the salt during absorption. The thermal disposal system can, for example, consist of one or more modules composed by: a plate collecting the liquid phase, a pump extracting and recycling the liquid phase from/in the column, and a heat exchanger, served with a refrigerant fluid and interposed between the pump and the column so as to cool the liquid phase before it is sent back into the column above the collection point of the liquid phase.

In particular, the absorber C1 has a gas phase inlet 11, positioned at a bottom end 12 of the absorber C1 and connected to the supply line 2 to receive the gas mixture to be treated; a bottom outlet 13, also positioned at the bottom end 12 of the absorber C1 and connected to a solvent recovery line 14; a head outlet 15, positioned at a top end 16 of the absorber C1 opposite to the bottom end and connected to a gas outlet line 17; and a liquid phase inlet 18, positioned at the top end 16 of the absorber C1 and connected to a solvent supply line 19 to supply the solvent system to the absorber C1.

According to the invention, the absorption step is carried out with a solvent system containing or capable of forming, by reaction with one or more acid gases, at least one liquid absorption solvent selected from particular ionic liquids.

In general terms, the expression ionic liquid indicates a chemical substance which, under predetermined conditions of temperature and pressure, is in the liquid state (even in the absence of solvents) and is made up exclusively (or largely predominantly) of ions, i.e. of atoms or aggregates of electrically charged atoms.

An ionic liquid is therefore constituted, unlike common organic substances (molecular liquids) which are made up of neutral molecules, by a negative ion (anion) and by a positive ion (cation).

In particular, the ionic liquids used in accordance with the invention are selected from the so-called "switchable" ionic liquids, i.e. ionic liquids that are generated in the course of a reaction between ionic liquid precursors and one or more acid gases, such as CO₂ or H₂S or mercaptans and CO₂ present in natural gas. Said ionic liquids are defined as "switchable" because they are easily decomposable at moderate temperatures, regenerating the precursors and releasing the absorbed acid gas.

The ionic liquid used as the liquid absorption solvent is then formed directly *in situ,* in the absorber C1 where the absorption step of the acid gas takes place, due to the reaction of the ionic liquid precursors contained in the solvent system with the acid gas (es). The solvent system feeded to the absorber C1 can contain ionic liquid and/or ionic liquid precursors, which are formed during the absorption step by reaction with the acid gas(es) present. During the start step of the process of the invention, a solvent system which might not even contain ionic liquids at all, which are formed instead in the absorption step, is supplied.

Switchable ionic liquid systems were first described by P.G.Jessop et al. in Energy Environ.Sci., 2008, 1, 487-493, but as such they are hardly usable industrially due to the high viscosity of the regenerable ionic liquid formed.

In order to obviate the above limit due to viscosity, other ionic liquid systems, applicable in particular in the present invention, have been studied and developed, such as those described in Italian patent application no. 102017000149793 filed on 27/12/2017, in which the switchable ionic liquid is added with a permanent ionic liquid, such as for example an imidazole salt of the bistrifluorimide, thus having a decrease in the overall viscosity of the system after the absorption of the acid gas and also having a system capable of exploiting the physical absorption by the permanent ionic liquid, thus having to provide a smaller amount of energy in the regeneration step.

In a preferred embodiment of the invention, the liquid absorption solvent used in the absorption step comprises one or more ionic liquids selected from those described in Italian patent application no. 102018000008452 filed on 10/09/2018, in which the switchable ionic liquid is made up of two ionic liquid precursors, while the third component is an efficient physical solvent, characterized by having high stability towards CO₂ and H₂S and can therefore also be used in the presence of high amounts of these components in natural gas.

According to what is described in the aforementioned patent application 102018000008452, the solvent system comprises or consists of three components:
- at least one organic base, in particular an amine or amidine, having a pKb (in water) smaller than or equal to 3.2;
- at least one alcoholic solvent (alcohol) of general formula R(OH)n having a boiling temperature higher than or equal to 100°C at ambient pressure (atmospheric pressure), wherein R is a linear or branched saturated alkyl group having a number of carbon atoms ranging between 2 and 20 and n is an integer ranging between 1 and 20, with the exclusion of ethanol;
- a polar aprotic solvent having a dielectric constant ε at 25°C greater than or equal to 30, a viscosity µ at 25°C less than or equal to 14 cP, preferably less than or equal to 12 cP, and a boiling temperature at normal pressure (ambient or atmospheric pressure) equal to or higher than 130°C.

As indicated above, the organic base and the alcohol are ionic liquid precursors that generate, in the presence of CO₂ and/or H₂S and/or mercaptans, switchable ionic liquids. The polar aprotic solvent acts as a physical solvent reducing the overall viscosity of the solvent system.

In particular, the organic base is selected from:
DBU (1,8-diazabicyclo (5.4.0) undec-7-ene),
DBN (1,5-diazabicyclo[4.3.0]non-5-ene),
TMG (1,1,3,3-tetramethylguanidine),
mixtures thereof.

Preferably, the organic base is DBU.

The alcoholic solvent is for example selected from: hexanol, octanol, hexanediol, octanediol, 2-ethylhexanol, mixtures thereof.

Preferably, the alcoholic solvent is hexanol.

The polar aprotic solvent is selected from: sulfolane, dimethyl sulfoxide (DMSO), 3-butylmethyl-imidazole-bistrifluorosulfonilimide (or 1-butyl-3-methylimidazole-bistrifluormethylsulfonilimide), other imidazole salts of the bistrifluorimide, mixtures thereof.

Preferably, the polar aprotic solvent is sulfolane.

Preferably, the solvent system contains: organic base in an amount ranging from 10 to 40% by weight, alcohol in an amount ranging from 10 to 40% by weight; physical solvent in an amount ranging from 10 to 40% by weight.

In the C1 absorber (absorber column), the gaseous phase consisting of the gas mixture containing acid gas and the liquid phase consisting of the liquid absorption solvent give rise to a process of absorption of the acid gas by the solvent (ionic liquid).

From the absorber C1 the following is taken: a lean gaseous mixture, from which the acid gas have been removed, through the head outlet 15 and the gas outlet line 17; and an enriched solvent, which has absorbed the acid gas, through the bottom outlet 13 and the solvent recovery line 14.

The solvent recovery line 14 connects the absorption section 3 to the regeneration section 4.

The regeneration section 4 comprises in particular a gas/liquid separator S1, configured to carry out the gas/liquid separation step in order to separate the acid gas(es) absorbed from the enriched solvent and to produce a regenerated solvent to be recirculated to the absorption section 3.

The separator S1 is in particular a flash separator, configured to carry out a gas/liquid separation by flash (partial evaporation) on the enriched solvent sent to the separator S1 and subject to expansion (lamination). Optionally, the separator S1 and the heat exchanger E2 can be integrated into a single equipment, as will be described with reference to Figure 2.

In particular, the separator S1 has a liquid phase inlet 21, connected to the solvent recovery line 14 and in particular to a final portion 14c of the solvent recovery line 14, to feed the enriched solvent coming from the absorption section 3 to the gas/liquid separator S1; a tail outlet 22, connected to a recirculation line 23, from which a stream of regenerated solvent is taken; and a head outlet 24, connected to a gas outlet line 25, from which the acid gas separated in the gas/liquid separator S1 are taken.

In the gas/liquid separator S1 the enriched solvent coming from the absorber C1 and containing the acid gas(es) is subjected to a separation step to remove the acid gas, essentially by a flash process.

The enriched solvent coming from the absorption section 3 (precisely, from the absorber C1) is fed to the gas/liquid separator S1, through the liquid phase inlet 21 and the solvent recovery line 14, after having been expanded and heated at suitable pressure and temperature values.

For this purpose, for example, the solvent recovery line 14 is equipped with an expander V1 (for example an expansion valve), where the enriched solvent coming from the absorber C1 expands at a predetermined pressure; and with a first heat exchanger E1 and a second heat exchanger E2 arranged in series with respect to each other and downstream of the expander V1 and operating to heat the stream of enriched solvent circulating in the solvent recovery line 14 before said stream of enriched solvent enters the gas/liquid separator S1.

In particular, the heat exchanger E1 serves to preheat the enriched solvent by heat exchange with the stream of regenerated solvent exiting the gas/liquid separator S1; the heat exchanger E2 then further raises the temperature of the enriched solvent, by heat exchange with an external fluid at a suitable temperature.

The regenerated solvent exiting from the gas/liquid separator S1 is recirculated to the absorption section 3 through the recirculation line 23, equipped with a pump P1 and connected to the solvent supply line 19.

Advantageously, the regenerated solvent is first cooled in the heat exchanger E1, where it transfers heat to the enriched solvent circulating in the solvent recovery line 14; reintegrated with eventual solvent losses through a fresh solvent supply line 26, connected to the recirculation line 23 in a coupling 27 arranged downstream of the heat exchanger E1 and through which a predetermined amount of fresh absorption liquid solvent is introduced into the recirculation line 23, if necessary to compensate for any losses; further cooled in another heat exchanger E3 arranged along the recirculation line 23 downstream of the coupling 27; and finally sent to the absorber C1 through the solvent supply line 19 and the liquid phase inlet 18.

In use, in execution of the process of the invention, the plant 1 operates as follows.

The gas mixture L1 to be treated, containing acid gas(es), is feeded under pressure to the absorber C1 where in countercurrent it comes into contact with the liquid absorption solvent, feeded to the head. The liquid absorption solvent absorbs the acid gas(es) from the gas mixture: the lean gaseous mixture then exits from the absorber head C1, while the enriched solvent containing the acid gas(es) exits from the bottom of the absorber C1. The enriched solvent is expanded in the expander V1, pre-heated in the heat exchanger E1 with the regenerated solvent exiting from the separator S1, further heated at the regeneration temperature in the heat exchanger E2, and then sent to the gas/liquid separator S1 where the acid gas separates from the top part, while the regenerated solvent which is recycled to the absorption section 3 separates from the bottom part. The regenerated solvent is first cooled in the heat exchanger E1, integrated with any losses through the fresh solvent supply line 26, further cooled in the heat exchanger E3 and then sent to the absorber C1.

In the embodiment of Figure 2, in which the details similar or identical to those already described are indicated with the same numbers, the plant 1 differs from the version of Figure 1 by the presence of an auxiliary system 30 configured to minimize losses of the more volatile component of the liquid abatement solvent; and/or by a different configuration of the system for heating the enriched solvent, which in this case is operated directly inside the gas/liquid separator S1.

In deeper detail, the auxiliary system 30 comprises an auxiliary line 31 which departs from a branch 32 of the solvent recovery line 14 to draw a fraction L3 of the enriched solvent taken from the absorber C1, which is separated from a main stream of enriched solvent which is instead sent, like before, to the gas/liquid separator S1.

The auxiliary line 31 is equipped with a heat exchanger E4, where the fraction L3 is cooled by an external fluid, and is connected to a liquid phase inlet 33 of a trap C2.

The trap C2, which contains gas/liquid contact elements and is for example configured in turn as an absorber column, is for example arranged above the gas/liquid separator S1.Optionally, the trap C2 can be integrated in the same column that defines the gas/liquid separator S1, of which in this case it constitutes a top portion.

In the trap C2, the fraction L3 (cooled enriched solvent) fed through the inlet 33 comes into contact with the acid gas flow from the gas/liquid separator S1 and is fed to the trap C2 through the gas outlet line 25, which in this case connects the head outlet 24 of the gas/liquid separator with a bottom inlet 34 of the trap C2.

In the trap C2, the cooled enriched solvent absorbs the traces of volatile solvent present in the acid gas flow. The solvent exiting from the trap C2 through a bottom line 35 falls by gravity into the gas/liquid separator S1 where it is regenerated together with the main stream of enriched solvent fed through the solvent recovery line 14.

The residual gases are taken from a head of the trap C2 through a gas outlet line 36.

The main stream of enriched solvent is heated to the regeneration temperature by a heat exchanger E2 which in this case is arranged inside the gas/liquid separator S1.

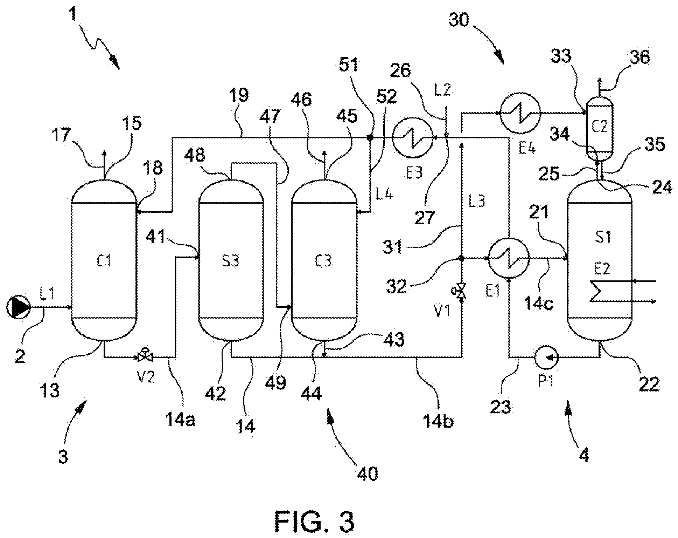

The embodiment of Figure 3, in which the details similar or identical to those already described are indicated with the same numbers, is particularly advantageous when the gaseous supply of the plant 1 (i.e. the mixture of gas L1 to be treated) consists mainly of hydrocarbons.

In this case, the plant 1 comprises, in addition to the auxiliary system 30 already described with reference to Figure 2, a system 40 for recovering the hydrocarbons dissolved in the enriched solvent.

In particular, the recovering system 40 comprises a second gas/liquid separator S3 and a second absorber C3 arranged in series along the solvent recovery line 14 downstream of the absorber C1 and upstream of the expander V1 and the gas/liquid separator S1.

Similarly to what has already been described with reference to the absorber C1 and the gas/liquid separator S1, also the absorber C3 and the gas/liquid separator S3 are for example defined by absorber columns. Optionally, the absorber C3 and the gas/liquid separator S3 can be integrated together in a single column, of which they constitute respective overlapping portions.

The solvent recovery line 14 comprises a first portion 14a, connecting the bottom outlet 13 of the absorber C1 with a liquid phase inlet 41 of the gas/liquid separator S3 and equipped with an expander V2 (for example an expansion valve) located between the absorber C1 and the gas/liquid separator S3; a second portion 14b, connecting a bottom outlet 42 of the separator S3 with the heat exchanger E1 and equipped with the expander V1; and a third final portion 14c connecting the heat exchanger E1 with the liquid phase inlet 21 of the gas/liquid separator S1.

In this case, the branch 32 from which the auxiliary line 31 of the auxiliary system 30 departs is arranged on the portion 14b of the solvent recovery line 14. Also in this case, the auxiliary line 31 serves to draw a fraction L3 of the enriched solvent taken from the absorber C1, which is separated from the main stream of enriched solvent which is sent to the gas/liquid separator S1.

Also in this case the auxiliary line 31 is equipped with the heat exchanger E4, where the fraction L3 is cooled by an external fluid, and is connected to a liquid phase inlet 33 of the trap C2, where the fraction L3 (cooled enriched solvent) feeded through the inlet 33, comes into contact with the acid gas flow exiting from the gas/liquid separator S1 and sent to the trap C2 through the gas outlet line 25, which connects the head outlet 24 of the gas/liquid separator with bottom inlet 34 of the trap C2; while the residual gases are taken from the trap C2 through the gas outlet line 36.

A solvent line 43 is in turn fitted onto the portion 14b connecting a bottom outlet 44 of the absorber C3 to the portion 14b. The absorber C3 has a head outlet 45 connected to a gas outlet line 46.

A gas line 47 connects a head outlet 48 of the gas/liquid separator S3 with a bottom inlet 49 of the absorber C3.

The recirculation line 23 comprises, downstream of the coupling 27 from which the fresh liquid absorption solvent is supplied and of the heat exchanger E3, a branch 51 from which a secondary branch 52 departs, connected to a liquid phase inlet 18 of the absorber C3 and in which a fraction L4 of regenerated solvent circulates, drawn from the stream of regenerated solvent circulating in the recirculation line 23.

In this embodiment, the enriched solvent taken from the absorber C1 goes through a first expansion in the expander V2, so that a first part of the hydrocarbons and of the acid gas dissolved in the solvent are released and are separated in the subsequent gas/liquid separator S3.

The gaseous phase separated in the gas/liquid separator S3 is then sent to the absorber C3, which separates the acid gas(es) from the mixture of gaseous hydrocarbons through the fraction L4 of regenerated solvent sent to the absorber C3.In this way, a lean stream of gaseous hydrocarbons is obtained from the head of the absorber C3 (at a lower pressure than those separated by the absorber C1) .

The enriched solvents exiting from the separator S3 and from the absorber C3 are then expanded in the expander V1 and sent to the regeneration section 4 and to the volatile solvent recovery system 30, as described with reference to the embodiment of figure 2.

### EXAMPLES

The plants described above have been operated in implementation of the process of the invention for softening various gas streams containing acid gas, with various compositions and with different operating conditions.

The operating parameters and the most significant flow rates of the plant 1 in the configuration of Figures 2 and 3 in implementation of the process of the invention are reported below by way of example.

Further examples were also conducted with the system configuration shown in figure 1.

Further examples were then conducted, in all plant configurations, by varying the compositions of the gaseous streams to be treated; and/or with different liquid absorption solvents, selected in accordance with what has been described above; and/or by varying the operating conditions in accordance with what has been described above.

### EXAMPLE 1

The plant 1 of figure 2 was used for the treatment of an associated gas containing CO2 in an amount of 15.0% vol.

A solvent system composed of hexanol, DBU (1,8-diazabicyclo(5.4.0)undec-7-ene) and sulfolane in the following mass proportions was used as the liquid absorption solvent:
hexanol:36%
DBU:28%
sulfolane:36%

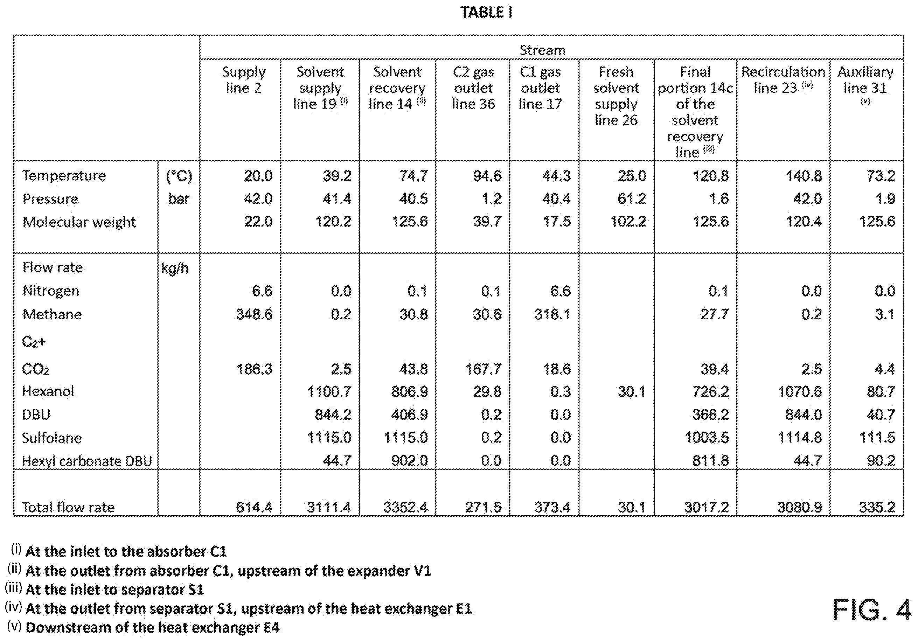

Operating parameters and flow rates of the various components in some significant points of the plant 1 are indicated in table I of figure 4.

The process allows the CO2 abatement up to a residual content lower than or equal to 2% vol. exiting altogether from the two absorbers C1, C3 (i.e. evaluating together the streams circulating in the gas outlet line 17 of the absorber C1 and in the gas outlet line 46 of the absorber C3).

### EXAMPLE 2

The plant 1 schematically shown in Figure 3 was used for the treatment of an associated gas containing CO2 in an amount of 30.4% vol.

A solvent system composed of hexanol, DBU (1,8-diazabicyclo(5.4.0)undec-7-ene) and sulfolane in the following mass proportions was used as the liquid absorption solvent:
hexanol:36%
DBU:28%
sulfolane:36%

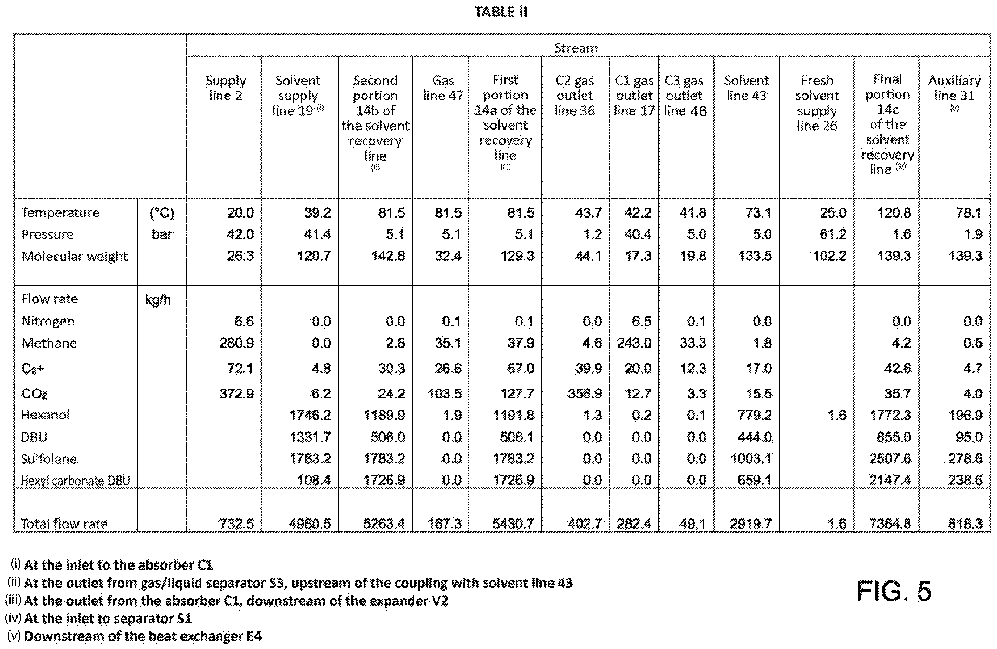

Operating parameters and flow rates of the various components in some significant points of the plant 1 are indicated in table II of figure 5.

The process allows the CO2 abatement up to a residual content lower than or equal to 2% vol. exiting altogether from the two absorbers C1, C3 (i.e. evaluating together the streams circulating in the gas outlet line 17 of the absorber C1 and in the gas outlet line 46 of the absorber C3).

### EXAMPLE 3

The plant 1 of figure 3 was used for the treatment of an associated gas containing CO2 in an amount of 15.2% vol.

A solvent system composed of hexanol, DBU (1,8-diazabicyclo(5.4.0)undec-7-ene) and sulfolane in the following mass proportions was used as the liquid absorption solvent:
hexanol:36%
DBU:28%
sulfolane:36%

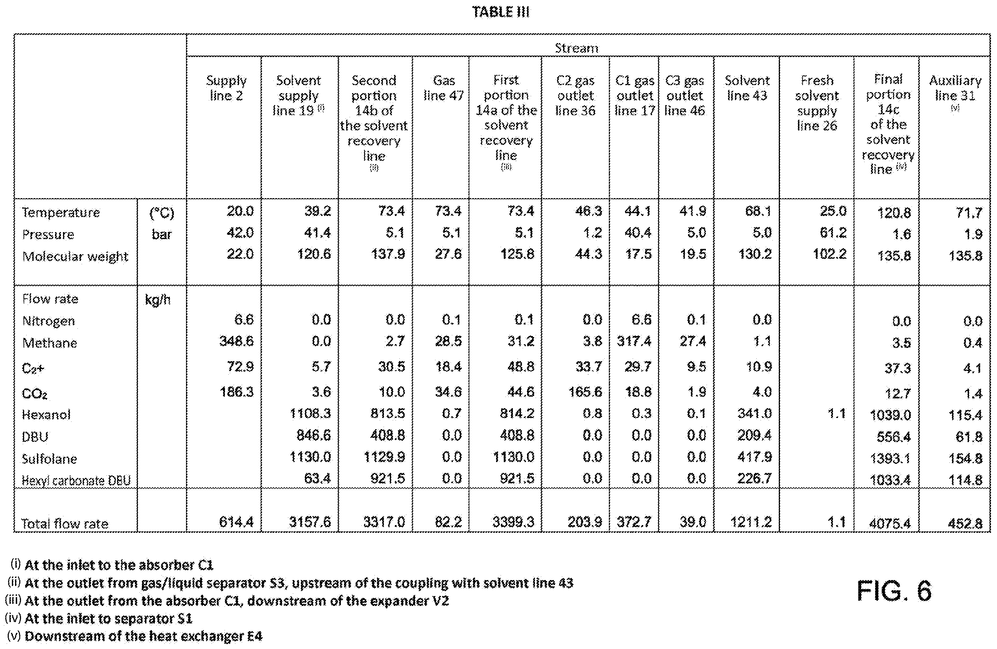

The operating parameters and flow rates of the various components about some crucial points of the plant 1 are indicated in table III of figure 6.

The process allows the CO2 abatement up to a residual content lower than or equal to 2% vol. exiting altogether from the two absorbers C1, C3 (i.e. evaluating together the streams circulating in the gas outlet line 17 of the absorber C1 and in the gas outlet line 46 of the absorber C3).

Finally, it is understood that further modifications and variations may be made to the process and plant described and illustrated here, which do not depart from the scope of the attached claims.

## Claims

1. Process for treatment of gas mixtures containing one or more acid gases to remove said one or more acid gases from the gas mixtures, comprising
an absorption step performed on a gas mixture containing one or more acid gases by means of a solvent system containing or capable of forming, by reaction with one or more acid gases, at least one liquid absorption solvent for removing from the gas mixture the acid gas(es) contained therein and forming a lean gas mixture, from which at least part of the acid gas(es) have been removed, and an enriched solvent containing the acid gas(es); and
a regeneration step, in which the enriched solvent is subjected to a gas/liquid separation step by a flash process to be separated from the absorbed acid gas(es) and to produce an acid gas flow and a regenerated solvent which is recirculated to the absorption step;
wherein the solvent system contains or is capable of forming, by reaction with one or more of said acid gases, at least one liquid absorption solvent selected from switchable ionic liquids;
wherein the liquid absorption solvent is generated during the absorption step by reaction of one or more ionic liquid precursors, contained in the solvent system, with the acid gas(es)contained in said gas mixture;
wherein the solvent system comprises, as ionic liquid precursors, at least one organic base having a pKb in water smaller than or equal to 3.2; and/or at least one alcohol solvent excluding ethanol having general formula R(OH)ₙ and having a boiling temperature higher than or equal to 100°C at ambient pressure, wherein R is a linear or branched saturated alkyl group having a number of carbon atoms ranging between 2 and 20 and n is an integer ranging between 1 and 20;
wherein the solvent system further comprises at least one physical solvent, said physical solvent being a polar aprotic solvent selected from sulfolane, dimethyl sulfoxide (DMSO), 3-butylmethyl-imidazole-bistrifluorosulfonilimide, other imidazole salts of bistrifluorimide, mixtures thereof.

2. Process according to claim 1, wherein the organic base is an amine or amidine.

3. Process according to claim 1 or 2, wherein the organic base is selected from DBU, DBN, TMG, mixtures thereof.

4. Process according to one of claims 1 to 3, wherein the alcohol solvent is selected from hexanol, octanol, hexanediol, octanediol, 2-ethylhexanol, mixtures thereof.

5. Process according to one of claims 1 to 4, wherein the solvent system contains organic base in an amount ranging from 10 to 40% by weight, alcohol solvent in an amount ranging from 10 to 40% by weight; physical solvent in an amount ranging from 10 to 40% by weight.

6. Process according to one of the previous claims, wherein the absorption step comprises a countercurrent washing of said gas mixture containing one or more acid gases with a liquid phase consisting of said solvent system.

7. Process according to one of the previous claims, wherein in the gas/liquid separation step by said flash process of the regeneration step, said one or more acid gases are separated from the enriched solvent coming from the absorption step and containing said absorbed acid gas(es) to produce said regenerated solvent, which is recirculated to the absorption step.

8. Process according to one of the previous claims, wherein said enriched solvent coming from the absorption step and containing said absorbed acid gas(es) is expanded and heated at predetermined pressure and temperature values and then fed to the gas/liquid separation step.

9. Process according to claim 8, wherein the heating of the enriched solvent is carried out in a first heating step by heat exchange with a stream of the regenerated solvent coming from the gas/liquid separation step; and/or in a second heating step by heat exchange with an external fluid.

10. Process according to one of the previous claims, wherein said regenerated solvent, before being recirculated to the absorption step, is subjected to:
a first cooling step in which it releases heat to the enriched solvent coming from the absorption step;
an optional replenishment step, in which the regenerated solvent is added with fresh liquid absorption solvent to balance any solvent losses;
a second cooling step to be further cooled.

11. Process according to one of the previous claims, wherein the enriched solvent is expanded, preheated with the regenerated solvent from the gas/liquid separation step, further heated to a regeneration temperature, and then fed to the gas/liquid separation step where acid gases are separated and the regenerated solvent is produced and recirculated to the absorption step.

12. Process according to one of the previous claims, comprising the steps of:
taking a fraction of the enriched solvent coming from the absorption step, by separating said fraction from a main stream of enriched solvent which is sent to the gas/liquid separation step;
sending said fraction, after cooling, to an auxiliary absorption step, where said fraction is contacted with the acid gas flow from the gas/liquid separation step to absorb traces of volatile solvent present in the acid gas flow;
feeding the enriched solvent exiting from the auxiliary absorption step to the gas/liquid separation step where the enriched solvent is regenerated together with the main stream of enriched solvent;
taking a flow of residual gas from the auxiliary absorption step.

## Patentansprüche

1. Verfahren zur Behandlung von Gasgemischen, die ein oder mehrere saure Gase enthalten, um diese sauren Gase aus den Gasgemischen zu entfernen, umfassend einen Absorptionsschritt, durchgeführt an einem Gasgemisch, das ein oder mehrere saure Gase enthält, mittels eines Lösungsmittelsystems, enthaltend oder befähigt zu bilden durch Reaktion mit einem oder mehreren sauren Gasen mindestens ein flüssiges Absorptionsmittel, um das bzw. die darin enthaltenen sauren Gase aus dem Gasgemisch zu entfernen und ein mageres Gasgemisch, aus dem zumindest ein Teil des bzw. der sauren Gase entfernt wurde, sowie ein angereichertes Lösungsmittel, welches das bzw. die sauren Gase enthält, zu bilden; und
einen Regenerationsschritt, in dem das angereicherte Lösungsmittel einer Gas/Flüssigkeits-Trennung durch ein Flash-Verfahren unterzogen wird, um von dem bzw. den absorbierten sauren Gasen abgetrennt zu werden und einen sauren Gasstrom sowie ein regeneriertes Lösungsmittel zu erzeugen, das in den Absorptionsschritt zurückgeführt wird;
wobei das Lösungsmittelsystem mindestens ein flüssiges Absorptionsmittel enthält oder durch Reaktion mit einem oder mehreren der sauren Gase bilden kann, das aus schaltbaren ionischen Flüssigkeiten ausgewählt ist;
wobei das flüssige Absorptionsmittel während des Absorptionsschritts durch Reaktion eines oder mehrerer in dem Lösungsmittelsystem enthaltener Vorläufer ionischer Flüssigkeiten mit dem/den in dem Gasgemisch enthaltenen sauren Gas(en) erzeugt wird;
wobei das Lösungsmittelsystem als Vorläufer ionischer Flüssigkeiten mindestens eine organische Base mit einem pKb-Wert in Wasser von weniger als oder gleich 3,2 und/oder mindestens ein alkoholisches Lösungsmittel, ausgenommen Ethanol, der allgemeinen Formel R(OH)n und mit einem Siedepunkt von höher als oder gleich 100 °C bei Umgebungsdruck umfasst, wobei R eine lineare oder verzweigte gesättigte Alkylgruppe mit einer Anzahl an Kohlenstoffatomen im Bereich zwischen 2 und 20 und n eine ganze Zahl im Bereich zwischen 1 und 20 ist;
wobei das Lösungsmittelsystem weiter mindestens ein physikalisches Lösungsmittel umfasst, wobei das physikalische Lösungsmittel ein polares aprotisches Lösungsmittel, ausgewählt aus Sulfolan, Dimethylsulfoxid (DMSO), 3-Butylmethyl-imidazol-bistrifluorsulfonimid, anderen Imidazolsalzen von Bistrifluorimid oder Gemischen davon, ist.

2. Verfahren nach Anspruch 1, wobei die organische Base ein Amin oder Amidin ist.

3. Verfahren nach Anspruch 1 oder 2, wobei die organische Base aus DBU, DBN, TMG oder Gemischen davon ausgewählt ist.

4. Verfahren nach einem der Ansprüche 1 bis 3, wobei das alkoholische Lösungsmittel aus Hexanol, Octanol, Hexandiol, Octandiol, 2-Ethylhexanol oder Gemischen davon ausgewählt ist.

5. Verfahren nach einem der Ansprüche 1 bis 4, wobei das Lösungsmittelsystem eine organische Base in einer Menge von 10 bis 40 Gew.-%, ein alkoholisches Lösungsmittel in einer Menge von 10 bis 40 Gew.-% und ein physikalisches Lösungsmittel in einer Menge von 10 bis 40 Gew.-% enthält.

6. Verfahren nach einem der vorhergehenden Ansprüche, wobei der Absorptionsschritt eine Gegenstromwäsche des Gasgemisches, das ein oder mehrere saure Gase enthält, mit einer flüssigen Phase, bestehend aus dem Lösungsmittelsystem, umfasst.

7. Verfahren nach einem der vorhergehenden Ansprüche, wobei im Gas/Flüssigkeits-Trennschritt durch den Flash-Prozess des Regenerationsschritts das oder die sauren Gase von dem aus dem Absorptionsschritt kommenden und das/die absorbierte(n) saure(n) Gas(e) enthaltenden angereicherten Lösungsmittel abgetrennt werden, um das regenerierte Lösungsmittel zu erzeugen, welches dem Absorptionsschritt wieder zugeführt wird.

8. Verfahren nach einem der vorhergehenden Ansprüche, wobei das aus dem Absorptionsschritt kommende angereicherte Lösungsmittel, das das/die absorbierte(n) saure(n) Gas(e) enthält, bei vorbestimmten Druck- und Temperaturwerten expandiert und erwärmt und anschließend dem Gas/Flüssigkeits-Trennschritt zugeführt wird.

9. Verfahren nach Anspruch 8, wobei die Erwärmung des angereicherten Lösungsmittels in einem ersten Erwärmungsschritt durch Wärmeaustausch mit einem Strom des regenerierten Lösungsmittels aus dem Gas/Flüssigkeits-Trennungsschritt und/oder in einem zweiten Erwärmungsschritt durch Wärmeaustausch mit einem externen Fluid durchgeführt wird.

10. Verfahren nach einem der vorhergehenden Ansprüche, wobei das regenerierte Lösungsmittel vor der Rückführung in den Absorptionsschritt unterzogen wird:
einem ersten Kühlschritt, in dem es Wärme an das aus dem Absorptionsschritt kommende angereicherte Lösungsmittel abgibt;
einem optionalen Nachschubschritt, worin dem regenerierten Lösungsmittel frisches flüssiges Absorptionsmittel zugesetzt wird, um etwaige Lösungsmittelverluste auszugleichen;
einem zweiten Kühlschritt, worin weiter gekühlt wird.

11. Verfahren nach einem der vorhergehenden Ansprüche, wobei das angereicherte Lösungsmittel expandiert, mit dem regenerierten Lösungsmittel aus dem Gas/Flüssigkeits-Trennschritt vorgewärmt, weiter auf eine Regenerationstemperatur erwärmt und dann dem Gas/Flüssigkeits-Trennschritt zugeführt wird, wo saure Gase abgetrennt und das regenerierte Lösungsmittel erzeugt und zum Absorptionsschritt zurückgeführt wird.

12. Verfahren nach einem der vorhergehenden Ansprüche, umfassend die Schritte:
Entnehmen einer Fraktion des angereicherten Lösungsmittels kommend von dem Absorptionsschritt, indem diese Fraktion aus einem Hauptstrom angereicherten Lösungsmittels, der der Gas-/Flüssigkeits-Kühlung zugeführt wird, abgetrennt wird;
Weiterleiten der Fraktion nach dem Abkühlen zu einem Hilfsabsorptionsschritt, wo die Fraktion mit dem sauren Gasstrom aus dem Gas/Flüssigkeits-Trennschritt in Kontakt gebracht wird, um Spuren von flüchtigem Lösungsmittel, die im sauren Gasstrom vorhanden sind, zu absorbieren;
Zuführen des aus der Hilfsabsorptionsstufe austretenden angereicherten Lösungsmittels zu dem Gas/Flüssigkeits-Trennschritt, wo das angereicherte Lösungsmittel zusammen mit dem Hauptstrom des angereicherten Lösungsmittels regeneriert wird;
Entnehmen eines Restgasstroms aus dem Hilfsabsorptionsschritt.

## Revendications

1. Procédé de traitement de mélanges gazeux contenant un ou plusieurs gaz acides pour retirer lesdits un ou plusieurs gaz acides des mélanges gazeux, comportant
une étape d'absorption réalisée sur un mélange gazeux contenant un ou plusieurs gaz acides au moyen d'un système de solvant contenant ou capable de former, par réaction avec un ou plusieurs gaz acides, au moins un solvant d'absorption liquide pour retirer, du mélange gazeux, le(s) gaz acide(s) qu'il contient et former un mélange gazeux appauvri, duquel au moins une partie du(des) gaz acide(s) a été retirée, et un solvant enrichi contenant le(s) gaz acide(s) ; et
une étape de régénération, dans laquelle le solvant enrichi est soumis à une étape de séparation gaz/liquide par un procédé de détente flash pour être séparé du(des) gaz acide(s) absorbé(s) et pour produire un flux de gaz acide et un solvant régénéré qui est recyclé vers l'étape d'absorption ;
dans lequel le système de solvant contient ou est capable de former, par réaction avec un ou plusieurs desdits gaz acides, au moins un solvant d'absorption liquide choisi parmi les liquides ioniques commutables ;
dans lequel le solvant d'absorption liquide est généré pendant l'étape d'absorption par réaction d'un ou de plusieurs précurseurs de liquide ionique, contenus dans le système de solvant, avec le(s) gaz acide(s) contenu(s) dans ledit mélange gazeux ;
dans lequel le système de solvant comporte, en tant que précurseurs de liquide ionique, au moins une base organique présentant un pKb dans l'eau inférieur ou égal à 3,2 ; et/ou au moins un solvant alcoolique à l'exclusion de l'éthanol présentant une formule générale R(OH)ₙ et présentant une température d'ébullition supérieure ou égale à 100 °C à pression ambiante, dans lequel R est un groupe alkyle saturé linéaire ou ramifié ayant un nombre d'atomes de carbone entre 2 et 20 et n est un nombre entier entre 1 et 20 ;
dans lequel le système de solvant comporte en outre au moins un solvant physique, ledit solvant physique étant un solvant aprotique polaire choisi parmi le sulfolane, le diméthylsulfoxyde (DMSO), le 3-butylméthyl-imidazole-bistrifluorosulfonilimide, d'autres sels d'imidazole de bistrifluorimide, les mélanges de ceux-ci.

2. Procédé selon la revendication 1, dans lequel la base organique est une amine ou une amidine.

3. Procédé selon la revendication 1 ou 2, dans lequel la base organique est choisie parmi DBU, DBN, TMG, les mélanges de ceux-ci.

4. Procédé selon l'une des revendications 1 à 3, dans lequel le solvant alcoolique est choisi parmi l'hexanol, l'octanol, l'hexanediol, l'octanediol, le 2-éthylhexanol, les mélanges de ceux-ci.

5. Procédé selon l'une des revendications 1 à 4, dans lequel le système de solvant contient une base organique en une quantité allant de 10 à 40 % en poids, un solvant alcoolique en une quantité allant de 10 à 40 % en poids ; un solvant physique en une quantité allant de 10 à 40 % en poids.

6. Procédé selon l'une des revendications précédentes, dans lequel l'étape d'absorption comporte un lavage à contre-courant dudit mélange gazeux contenant un ou plusieurs gaz acides avec une phase liquide consistant en ledit système solvant.

7. Procédé selon l'une des revendications précédentes, dans lequel dans l'étape de séparation gaz/liquide par ledit procédé de détente flash de l'étape de régénération, lesdits un ou plusieurs gaz acides sont séparés du solvant enrichi provenant de l'étape d'absorption et contenant le(s)dit(s) gaz acide(s) absorbé(s) pour produire ledit solvant régénéré, qui est recyclé vers l'étape d'absorption.

8. Procédé selon l'une des revendications précédentes, dans lequel ledit solvant enrichi provenant de l'étape d'absorption et contenant le(s)dit(s) gaz acide(s) absorbé(s) est dilaté et chauffé à des valeurs de pression et de température prédéterminées, puis fourni à l'étape de séparation gaz/liquide.

9. Procédé selon la revendication 8, dans lequel le chauffage du solvant enrichi est réalisé dans une première étape de chauffage par échange thermique avec un flux du solvant régénéré provenant de l'étape de séparation gaz/liquide ; et/ou dans une deuxième étape de chauffage par échange thermique avec un fluide externe.

10. Procédé selon l'une des revendications précédentes, dans lequel ledit solvant régénéré, avant d'être recyclé vers l'étape d'absorption, est soumis à :
une première étape de refroidissement dans laquelle il libère de la chaleur pour le solvant enrichi provenant de l'étape d'absorption ;
une étape facultative de réapprovisionnement, dans laquelle du solvant régénéré est ajouté au solvant d'absorption liquide frais pour compenser toute perte de solvant ;
une deuxième étape de refroidissement pour être davantage refroidi.

11. Procédé selon l'une des revendications précédentes, dans lequel le solvant enrichi est dilaté, préchauffé avec le solvant régénéré provenant de l'étape de séparation gaz/liquide, chauffé davantage jusqu'à une température de régénération, puis fourni à l'étape de séparation gaz/liquide où les gaz acides sont séparés et le solvant régénéré est produit et recyclé vers l'étape d'absorption.

12. Procédé selon l'une des revendications précédentes, comportant les étapes suivantes :
prélever une fraction du solvant enrichi provenant de l'étape d'absorption, en séparant ladite fraction d'un flux principal de solvant enrichi qui est envoyé vers l'étape de séparation gaz/liquide ;
envoyer ladite fraction, après refroidissement, vers une étape d'absorption auxiliaire, où ladite fraction est mise en contact avec le flux de gaz acide provenant de l'étape de séparation gaz/liquide pour absorber les traces de solvant volatil présent dans le flux de gaz acide ;
fournir le solvant enrichi sortant de l'étape d'absorption auxiliaire à l'étape de séparation gaz/liquide où le solvant enrichi est régénéré conjointement avec le flux principal de solvant enrichi ;
prélever un flux de gaz résiduel provenant de l'étape d'absorption auxiliaire.
